# EUROPEAN PATENT APPLICATION

(11) **EP 2 696 258 A1**
(43) Date of publication of application: **12.02.2014**
(21) Application number: 13152521.4
(22) Date of filing: 24.01.2013
(51) Int. Cl.: G06F 1/20

(54) **Heat dissipation mechanism**

(30) Priority: 06.08.2012 TW 101215052
(71) Applicant: Acer Incorporated, Taipei Hsien 221 (TW)
(72) Inventor: Wang, Cheng-Pang, 221 Taipei Hsien (TW); Liao, Wen-Neng, 221 Taipei Hsien (TW)
(74) Representative: Becker Kurig Straus

(57) **Abstract**

A heat dissipation mechanism is provided, comprising a main casing, an air exhaust device and a first sub-casing. The main casing includes an opening, an air outlet and a main joining portion. The air exhaust device is disposed in the main casing to exhaust air through the air outlet from the main casing. The first sub-casing includes a first through hole and a first joining portion, wherein the first through hole communicates with the opening, and the first joining portion engages with the main connecting portion, so as to fix the first sub-casing to the main casing.

## Description

### CROSS REFERENCE TO RELATED APPLICATIONS

This Application claims priority of Taiwan Patent Application No. 101215052, filed on August 6, 2012, the entirety of which is incorporated by reference herein.

### BACKGROUND OF THE INVENTION

### Field of the Invention

The present invention relates to a heat dissipation mechanism, and in particular, relates to a heat dissipation mechanism for a stacking system.

### Description of the Related Art

Various external components such as a graphics processing units, memories, and hard disks can be connected to traditional notebook computers due to their compact dimensions. However, the external components all need heat dissipation devices, which increase production costs. Thus, decreasing the cost of heat dissipation devices, while maintaining efficiency has become an important issue in the field.

### BRIEF SUMMARY OF THE INVENTION

The present invention provides a heat dissipation mechanism, comprising a main casing, an air exhaust device, and at least a first sub-casing. The main casing includes an opening, an air outlet and a main joining portion. The air exhaust device is disposed in the main casing to exhaust air through the air outlet from the main casing. The first sub-casing includes a first through hole and a first joining portion, wherein the first through hole communicates with the opening and the first joining portion engages with the main connecting portion, so as to fix the first sub-casing to the main casing.

### BRIEF DESCRIPTION OF THE DRAWINGS

The present invention can be more fully understood by reading the subsequent detailed description and examples with references made to the accompanying drawings, wherein:

Fig. 1a and 1b is a schematic view showing a main casing of a heat dissipation mechanism according to an embodiment of the invention;

Fig. 2a and 2b is a schematic view showing a first sub-casing of a heat dissipation mechanism according to an embodiment of the invention;

Fig. 3 is a schematic view of a heat dissipation mechanism according to an embodiment of the invention;

Fig. 4 is a schematic view of a heat dissipation mechanism according to another embodiment;

Fig. 5 is a schematic view of a heat dissipation mechanism according to another embodiment of the invention t;

Fig. 6 is a schematic view of a heat dissipation mechanism according to another embodiment of the invention;

Fig. 7 is a schematic view of a heat dissipation mechanism according to another embodiment of the invention;

Fig. 8 is a schematic view of a heat dissipation mechanism according to another embodiment of the invention;

Fig. 9 is a schematic view of a heat dissipation mechanism according to another embodiment of the invention;

Fig. 10 is a schematic view of a main casing of a heat dissipation mechanism according to another embodiment of the invention; and

Fig. 11 is a schematic view showing an of a heat dissipation mechanism according to an embodiment of the invention;

### DETAILED DESCRIPTION OF THE INVENTION

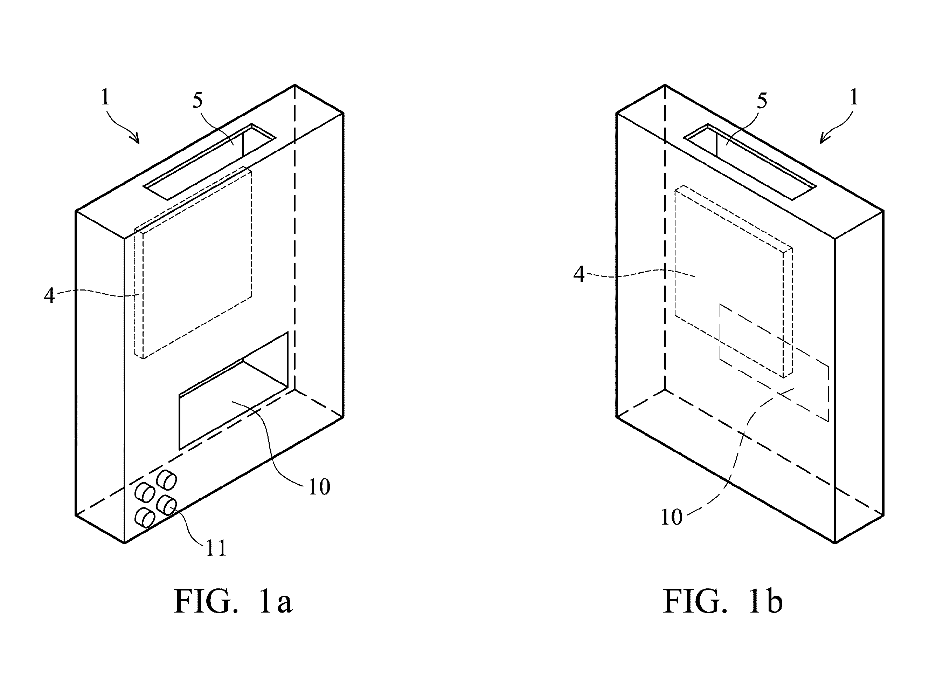

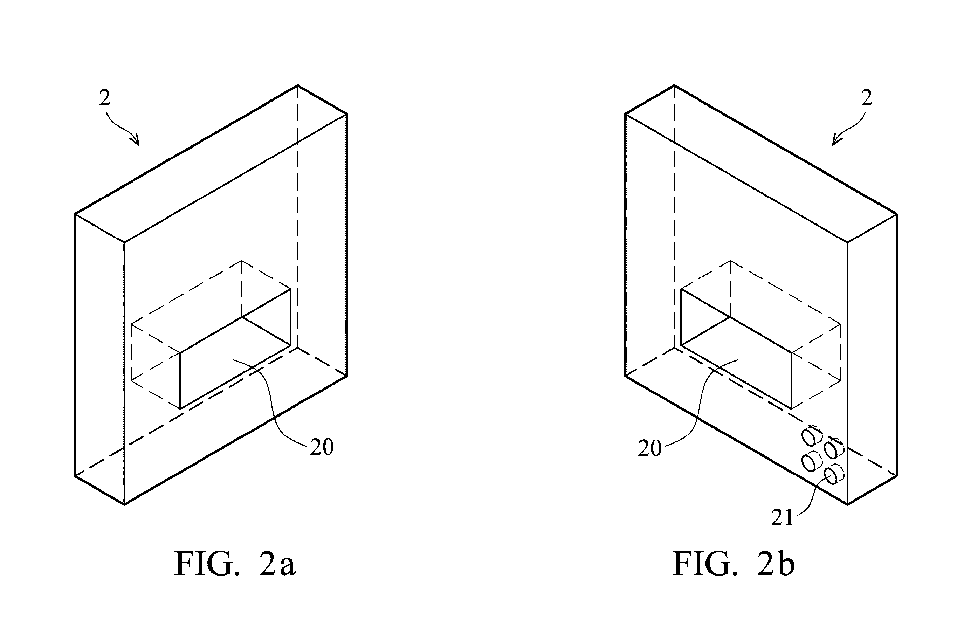

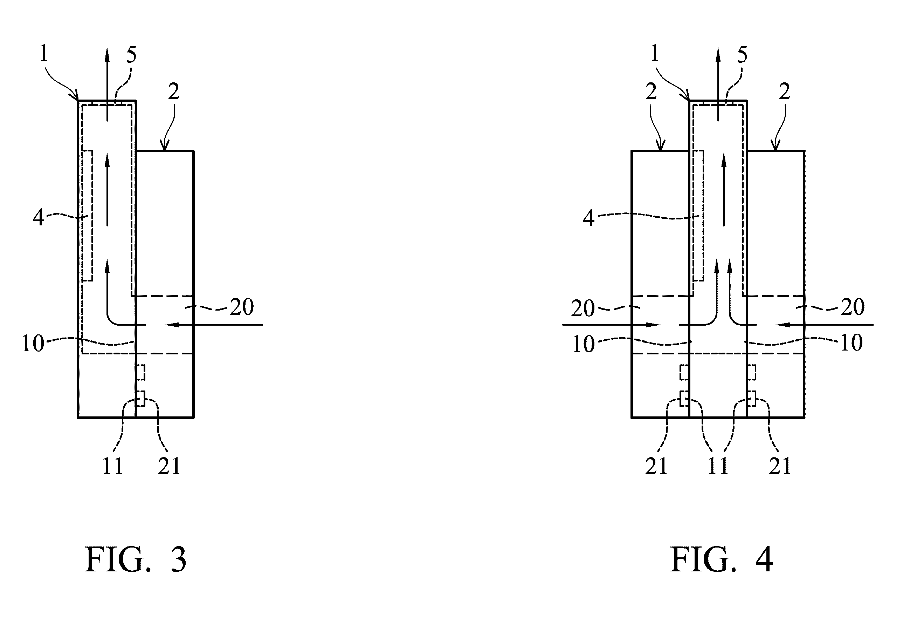

Referring to Fig. 1a to 3, an embodiment of a heat dissipation mechanism (Fig. 3) comprises a main casing 1 and a first sub-casing 2. As shown in Fig. 1a and 1b, the main casing 1 comprises an opening 10, an air outlet 5 and a main joining portion 11. The main joining portion 11 projects from a surface of the main casing 1, and an air exhaust device 4 is disposed in the main casing 1. In this embodiment, the air exhaust device 4 may include a fan for exhausting air in the main casing 1 through the air outlet 5, wherein an electronic component such as a graphics processing unit may also be disposed in the main casing 1. As shown in Figs. 2a and 2b, the first sub-casing 2 comprises a first through hole 20 and a first joining portion 21, wherein the first joining portion 21 may be a recess formed on a surface of the first sub-casing 2.

Referring to Fig. 3, when the main casing 1 is engaged with the first sub-casing 2, the main joining portion 11 is engaged with the first joining portion 21, and the first through hole 20 is communicated with the opening 10. As the arrows indicate in Fig. 3, as the main casing 1 is engaged with the first sub-casing 2, the fan 4 drives air from the first through hole 20, through the first sub-casing 2 and the main casing 1 for heat dissipation. Subsequently, air is exhausted by the fan 4 through an air outlet 5 on the top side of the main casing 1. In some embodiments , the air outlet 5 may also be disposed on other sides of the main casing 1.

Referring to Fig. 4, another embodiment of a heat dissipation mechanism comprises a main casing 1 and two first sub-casings 2. As shown in Fig. 4, the main casing 1 comprises two openings 10 and two main joining portions 11, wherein the openings 10 and the main joining portions 11 are respectively disposed on opposite sides of the main casing 1. When the main casing 1 is engaged with the first sub-casings 2, the two first sub-casings 2 are disposed on opposite sides of the main casing 1, wherein the two first joining portions 21 of the first sub-casings 2 are respectively engaged with the two main joining portions 11, and the two first through holes 20 are respectively communicated with the two openings 10. After assembly, the fan 4 can inhales air from the first through holes 20 for dissipating the heat inside of the two first sub-casings 2, and air can be exhausted through an air outlet 5 on the top side of the main casing 1 by the fan 4.

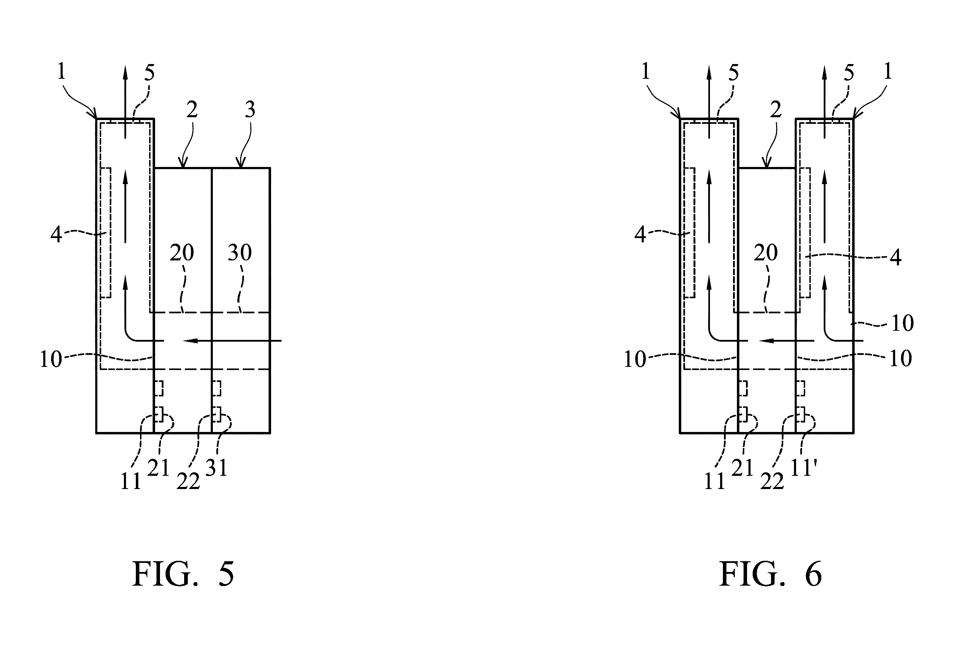

Referring to Fig. 5, another embodiment of a heat dissipation mechanism comprises a main casing 1, a first sub-casing 2, and a second sub-casing 3. The first sub-casing 2 has a hollow first joining portion 21 and a protruding second joining portion 22, and the first joining portion 21 and the second joining portion 22 are disposed on opposite sides thereof. As shown in Fig. 5, the second sub-casing 3 has a second through hole 30 and a hollow third joining portion 31. The main casing 1, the first sub-casing 2, and the second sub-casing 3 can be assembled, wherein the main joining portion 11 engages with the first joining portion 21, the second joining portion 22 engages with the third joining portion 31, and the first through hole 20 communicates with the opening 10 and the second through hole 30. As a result, the fan 4 can inhale air from the second through hole 30 and dissipate heat sequentially through the second sub-casing 3, the first sub-casing 2, and the main casing 1. Subsequently, air is exhausted through an air outlet 5 on the top side of the main casing 1 by the fan 4 (as arrows indicate shown in Fig. 5).

Referring to Fig. 6, another embodiment of a heat dissipation mechanism comprises two main casings 1 and a first sub-casing 2, wherein the main casing 1 on the right side of the first sub-casing 2 has a hollow main joining portion 11' and two openings 10, and the main casing 1 on the left side of the first sub-casing 2 has a protruding main joining portion 11 and an opening 10. In this embodiment, a first joining portion 21 and a second first joining portion 22 are respectively disposed on the right and left sides of the first sub-casing 2. When the first sub-casing 2 is connected to the two main casings 1, the main joining portion 11 is engaged with the first joining portion 21, the second joining portion 22 is engaged with the main joining portion 11', and all the openings 10 of the main casings 1 are communicated with the first through hole 20 of the first sub-casing 2. After assembly, two fans 4 in the main casings 1 can inhale air from the opening 10 on the right side of the main casing 1 and dissipate heat through the air outlets 5.

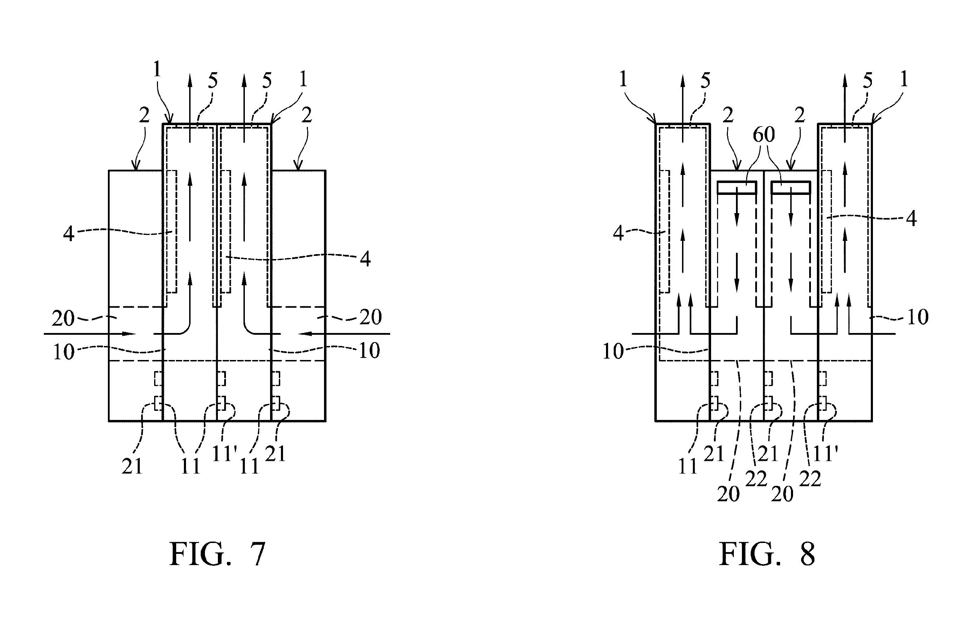

Referring to Fig. 7, another embodiment of a heat dissipation mechanism comprises two main casings 1 and two first sub-casings 2. Two protruding hollow main joining portions 11 are respectively formed on the opposite sides of the left main casing 1. The right main casing has a main joining portion 11 and a main portion 11' on opposite sides thereof for engagement with the left main casing 1. The first joining portions 21 are respectively formed on the two first sub-casings, and the first joining portions 21 are corresponding to the main joining portions 11. As shown in Fig. 7, the main casings 1 can be connected to each other and the first sub-casings 2 can be disposed on opposite sides of the two main casings 1 and respectively engaged therewith. Thus, air can enter the heat dissipation mechanism through the first through hole 20, dissipating heat inside of the two main casings 1 and the first sub-casings 2. Subsequently, air can be exhausted through air outlets 5 on the top sides by the two fans 4.

Referring to Fig. 8, another embodiment of a heat dissipation mechanism comprises two main casings 1 and two first sub-casings 2, wherein the two first sub-casings 2 are connected to each other. The two main casings 1 are respectively disposed on opposite sides of the two sub-casings 2 and engaged with the first sub-casings 2. In this embodiment, two air inlets 60 are respectively disposed on the two first sub-casings 2, and air can enter the heat dissipation mechanism through the two openings 10 and the air inlets 60 for dissipating heat in the first sub-casings 2. Subsequently, air may be exhausted through the air outlets 5 on the top side of the two main casings 1 by the fans 4.

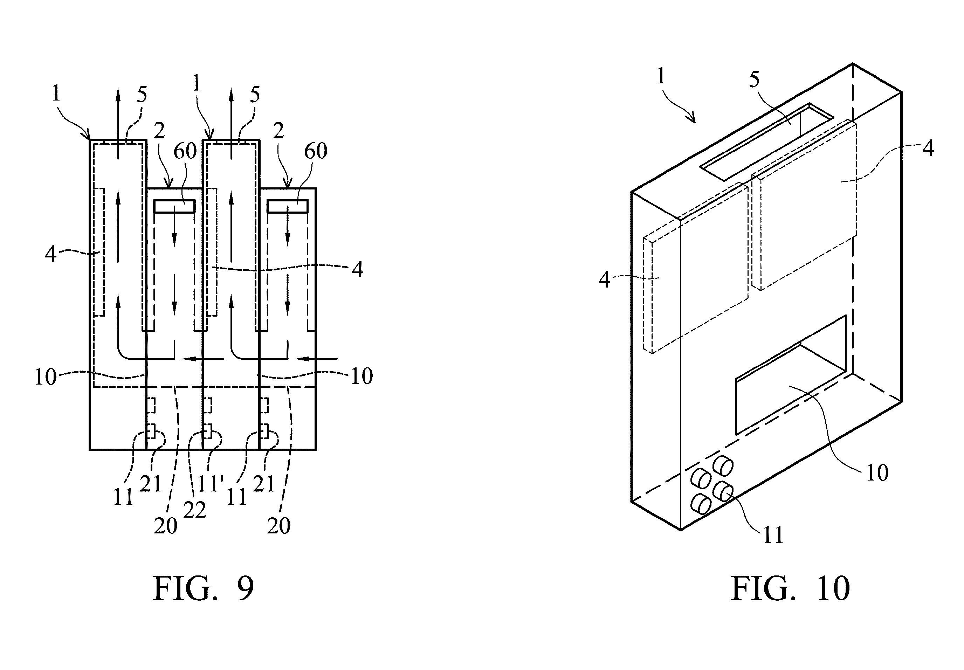

Referring to Fig. 9, another embodiment of a heat dissipation mechanism comprises two main casings 1 and two first sub-casings 2, wherein the main casings 1 and first sub-casings 2 are connected to each other and arranged in a staggered manner. In this embodiment, air can enter the heat dissipation mechanism through the first through hole 20 or the air inlets 60. Subsequently, air flows through the first sub-casing 2 and main casing 1, and can be exhausted through air outlets 5 on the top side of the two main casings 1 by the fans 4.

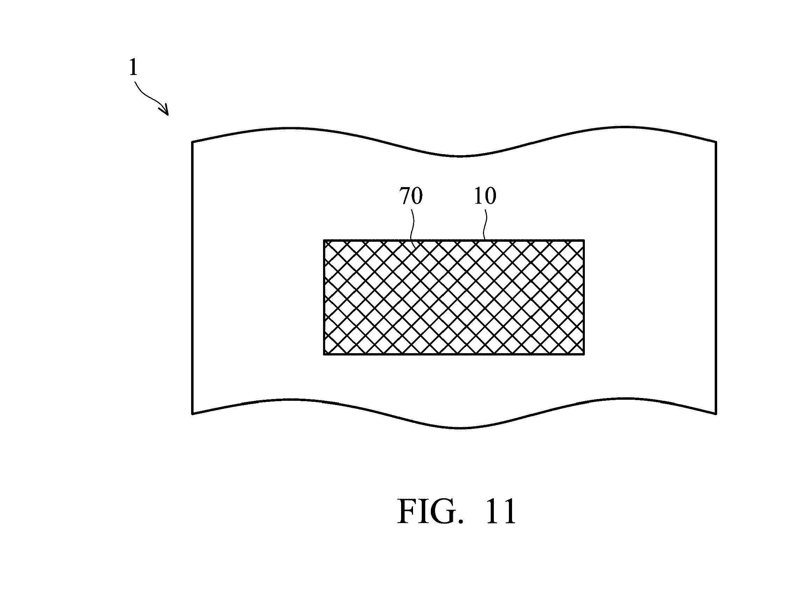

Referring to Fig. 10, another embodiment of a main casing 1 may comprise two fans 4 for increasing the quantity of air flow. As shown in Fig. 11, a meshed structure 70 may be disposed on the opening 10 of the main casing 1, and the ventilation area ratio of the meshed structure 70 ranges from 30% ∼50%. However, the meshed structure 70 may also be disposed on the first through hole 20 of the first sub-casing 2 or the second through hole 30 of the second sub-casing 3 for preventing damage of the fan 4 due to unexpected impact from external objects.

Specifically, when the main joining portions 11, 11', the first joining portion 21, the second joining portion 22, and the third joining portion 31 are engaged with each other, the mechanical strength between the casings is improved, and electrical signals can be transmitted between the electronic components in the casings through the joining portions. Thus, the heat dissipation mechanism can form a flow channel by engaging the main casing with the sub-casing, so as to rapidly dissipate heat and improve cooling efficiency of a stacking system.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A heat dissipation mechanism is provided, comprising:
a main casing, including an opening, an air outlet and a main joining portion;
an air exhaust device, disposed in the main casing to exhaust air through the air outlet from the main casing; and
at least a first sub-casing, including a first through hole and a first joining portion, wherein the first through hole communicates with the opening, and the first joining portion engages with the main connecting portion, so as to fix the first sub-casing to the main casing.

2. The heat dissipation mechanism as claimed in claim 1, wherein the heat dissipation mechanism further comprises two first sub-casings, and the main casing further comprises two openings and two main joining portions,
wherein the first sub-casings are respectively disposed on opposite sides of the main casing, the first joining portions of the first sub-casings are respectively engaged with the main joining portions, and the first through holes are respectively communicated with the openings.

3. The heat dissipation mechanism as claimed in claim 1, wherein the heat dissipation mechanism further comprises a second sub-casing and the first sub-casing further comprises a second joining portion, and the first and second joining portions are respectively disposed on opposite sides of the first sub-casing, and the second sub-casing includes a second through hole and a third joining portion, wherein the second through hole communicates with the first through hole, and the third joining portion engages with the second joining portion.

4. The heat dissipation mechanism as claimed in claim 1, wherein the heat dissipation mechanism further comprises two main casings, and one of the main casings comprises two openings, and the first sub-casing further comprises a second joining portion, and the first and second joining portions are respectively disposed on opposite sides of the first sub-casing and respectively engaged with the main casings, and the openings are communicated with the first through hole.

5. The heat dissipation mechanism as claimed in claim 1, wherein the heat dissipation mechanism further comprises two main casings and two first sub-casings, the main casings are engaged with each other, and the first sub-casings are disposed on opposite sides of the main casings.

6. The heat dissipation mechanism as claimed in claim 1, wherein the heat dissipation mechanism further comprises two main casings and two first sub-casings, the first sub-casings are engaged with each other, and the main casings are disposed on opposite sides of the first sub-casings.

7. The heat dissipation mechanism as claimed in claim 1, wherein the heat dissipation mechanism further comprises two main casings and two first sub-casings engaged with each other and arranged in a staggered manner.

8. The heat dissipation mechanism as claimed in claim 1, wherein the main joining portion is engaged with and electrically connected to the first joining portion.

9. The heat dissipation mechanism as claimed in claim 1, wherein the first sub-casing further comprises an air inlet, and air flows into the first sub-casing through the air inlet.

10. The heat dissipation mechanism as claimed in claim 1, wherein the main casing further comprises a meshed structure, disposed in the opening, and the ventilation area ratio ranges from 30% ∼50%.
